# EUROPEAN PATENT APPLICATION

(11) **EP 1 919 261 A1**
(43) Date of publication of application: **07.05.2008**
(21) Application number: 06291718.2
(22) Date of filing: 30.10.2006
(51) Int. Cl.: H05B 33/08

(54) **Low frequency, constant current control circuit for power leds**

(71) Applicant: Alcatel Lucent, 75008 Paris (FR)
(72) Inventor: Telefont, Heinz, 3500 Krems-Egelsee (AT)
(74) Representative: Kohler Schmid Möbus

(57) **Abstract**

An electronic circuit for controlling an LED (light emitting diode) signal lamp, with a voltage input (LVI) for a low frequency, low voltage current source, and with an LED signal lamp (SL) comprising a plurality of LEDs (LED1-LED12) connected in series, comprises
- a transformer (TR1) with a primary coil (PC) and a secondary coil (SC),
- an AC (alternating current) switch (ACS) with two current contacts (CU1, CU2) and two control contacts (CR1, CR2), wherein the primary coil is connected to the voltage input via the two current contacts of the AC switch,
- a second rectifier (RECT2), in particular bridge rectifier, wherein the secondary coil is connected to the second rectifier,
- a loading capacitor (C2) connected to the output of the second rectifier, wherein the LED signal lamp is connected to the loading capacitor,
- a monitoring resistor (RM) connected in series with the LED signal lamp,
- a control voltage input (input1) for providing a control voltage (E),
- a comparator (COMP1), wherein a first comparator input (2) is connected to the control voltage input and a second comparator input (3) is connected to the monitoring resistor, and wherein a comparator output (4) is connected to one of the control contacts (CR2) of the AC switch for controlling the AC switch such that the AC switch is switched off when the voltage at the second comparator input exceeds the voltage at the first comparator input. The inventive electronic circuit is less susceptible to and produces less RF interferences, and requires less component efforts.

## Description

### Background of the invention

The invention relates to an electronic circuit for controlling an LED (light emitting diode) signal lamp,
with a voltage input for a low frequency, low voltage current source, and with an LED signal lamp comprising a plurality of LEDs connected in series.

Such an electronic circuit is known from the data sheet "Max 668 / Max 669", 19-4778; Rev 1; 1/2002, page 17, from Maxim Integrated Products.

In signalling technology, in particular with traffic lights and railway signal lamps, LEDs (light emitting diodes) have become popular for replacing conventional light bulbs: LED signal lamps are appreciated for their higher efficiency and longer life time than light bulbs.

In railway signal lamps, for example, a 12V / 35 W light bulb may be replaced with 12 high power LEDs, forming an LED signal lamp. The LEDs are usually equipped with special mirror and lens systems.

The usual power supply in railway technology is a 230 V / 50 Hz net supply, and an transformer changes this to 12 V / 50 Hz, what is well suited for a common light bulb. However, when powering an LED signal lamp, such a 12 V / 50 Hz low voltage, low frequency current source is not used directly in the state of the art.

In the state of the art, such as "Max 668" circuit, such a current source is used for powering an LED signal lamp as follows: the input voltage is rectified and supplied into an RF (radio frequency) controller, usually designed as an integrated circuit (IC). The RF controller chops the rectified input voltage into short pulses, for example at about 400 kHz. The pulses are fed into a transformer, with the secondary coil loading a capacitor. The capacitor, in turn, powers the LEDs.

Although an electronic circuit for the above mentioned procedure is rather compact, it is disadvantageous in that it is susceptible to RF interferences and therefore usually requires interference suppression components. Also, it may produce RF interferences, so other electronic equipment in the surroundings may require interference suppression components. Moreover, the RF controller IC is rather expensive.

### Object of the invention

It is the object of the invention to introduce an electronic circuit for powering an LED signal lamp with a low frequency, low voltage current source, which is less susceptible to and produces less RF interferences, and which requires less component efforts.

### Short description of the invention

This object is achieved, in accordance with the invention, by an electronic circuit as introduced in the beginning, comprising
- a transformer with a primary coil and a secondary coil,
- an AC (alternating current) switch with two current contacts and two control contacts, wherein the primary coil is connected to the voltage input via the two current contacts of the AC switch,
- a second rectifier, in particular bridge rectifier, wherein the secondary coil is connected to the second rectifier,
- a loading capacitor connected to the output of the second rectifier, wherein the LED signal lamp is connected to the loading capacitor,
- a monitoring resistor connected in series with the LED signal lamp,
- a control voltage input for providing a control voltage,
- a comparator, wherein a first comparator input is connected to the control voltage input and a second comparator input is connected to the monitoring resistor, and wherein a comparator output is connected to one of the control contacts of the AC switch for controlling the AC switch such that the AC switch is switched off when the voltage at the second comparator input exceeds the voltage at the first comparator input.

According to the invention, the low frequency AC input voltage is immediately fed into a transformer. Although this is less efficient than transforming RF pulses as in the state of the art, this procedure prevents the introduction and generation of RF interferences. Actually, the inventive electronic circuit does not need any RF components at all.

The inventive electronic circuit moreover provides a simple, but effective current controlling: The LED signal lamp is provided with power from a loading capacity, connected to the secondary coil of the transformer. The voltage across a measuring resistor, which is connected in series with the LED signal lamp, is compared to an externally provided control voltage. If the voltage across the measuring resistor becomes too high, i.e. the LED current exceeds a critical level, the comparator switches the AC switch into a non-conductive state, and the AC voltage supply to the primary coil of the transformer is interrupted. As a consequence, the loading capacitor is no more loaded; the loading capacitor is then discharged by the LED current, and the LED current decreases. If the LED current drops below the critical level again, the comparator no more signals the AC switch to block, and the AC switch becomes conductive again, preferably automatically as this is preferably its default condition. Thus, the charging of the loading capacitor is resumed.

The inventive electronic circuit can be attached directly to the position of a conventional light bulb, powered with a 12 V / 50 Hz low voltage, low frequency current source (which usually is a secondary side of a transformer). Therefore, with the invention, conventional light bulbs can be replaced very easily.

The electronic circuit can easily be adapted to different types and numbers of LEDs, for example by choosing the loading capacitor properly. If necessary, an additional resistor can be added between the LED signal lamp and the monitoring resistor, too, to adjust the voltage at the second comparator input.

The series connection of the LEDs of the signal lamp facilitates a defect detection.

### Preferred variants of the invention

In a preferred embodiment of the inventive electronic circuit, the AC switch comprises a switching device connecting the two current contacts, wherein the switching device comprises two switching inputs controlled via the control contacts. The switching device connects the two current contacts of the AC switch in case of a sufficient potential difference between the two switching inputs, and disconnects the two current contacts in case of an insufficient potential difference (in particular a zero potential difference) between the switching inputs.

In a preferred further development of this embodiment, the switching device comprises a first rectifier, in particular bridge rectifier, connected to a switching transistor, and that the gate or base of the switching transistor is one of the switching inputs. This design is particularly cost-efficient. The switching transistor is preferably a field effect transistor, in particular a MOSFET.

Alternatively, in another preferred further development of this embodiment, the switching device comprises a triac, in particular wherein the switching device further comprises a zero-crossing switch driving the triac. The triac is sometimes also referred to a solid state relay. If combined with a zero-crossing switch, the electronic circuit is particularly resistant to RF interferences.

Highly preferred is another further development of above mentioned embodiment, characterized in that one of the switching inputs is connected to a starting resistor and the other switching input is connected to a starting capacitor, and that the starting resistor and the starting capacitor together are connected to the voltage input via a diode. With these components, the switching inputs are set to a voltage sufficient for making the switching device conductive as the default condition, what is in particular useful when the electronic circuit is activated the first time, or after a "stop loading" signal of the comparator has ended. Only when the comparator gives a "stop loading" signal, the AC switch disconnects the current contacts then. Upon a "stop loading" signal of the comparator, the switching inputs of the switching device are typically short-circuited in accordance with the invention.

In a further development of the above mentioned embodiment, the switching inputs are connected by a Zener diode. The Zener diode protects the switching device, for example the gate of a field effect transistor, from damaging voltages.

In a highly preferred embodiment of the inventive electronic circuit, the AC switch comprises an optocoupler, with the control contacts of the AC switch being connected to an LED of the optocoupler. If the AC switch comprises a switching device, the optocoupler is connected to the switching inputs. With the optocoupler, a potential-free control of the AC switch is possible. Primary side and secondary side of the transformer are strictly separated electronically.

In another preferred embodiment, one of the control contacts of the AC switch is connected to the loading capacitor, in particular via a resistor. The charge of the loading capacitor can be used to provide switching potential to the control contacts of the AC switch. Note that in alternative designs, one of the control contacts may be connected to earth.

In another preferred embodiment, the primary coil has a number of NP windings, and the secondary coil has a number of NS windings, with a ratio NP/NS of between 1:4 up to 1:25, in particular wherein NP/NS is about 1:10. These winding ratios have been found useful in practice, in particular with an LED signal lamp comprising 12 LEDs operated at 4 V, 300 mA.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic diagram illustrating an inventive electronic circuit, comprising a switching device with a first rectifier and a switching transistor;
- Fig. 2: shows a schematic diagram illustrating an inventive electronic circuit, comprising a switching device with a triac and a zero crossing switch;
- Fig. 3: shows oszillograph plots illustrating the potentials and currents at a plurality of positions in the electronic circuit of Fig. 1 as a function of time.

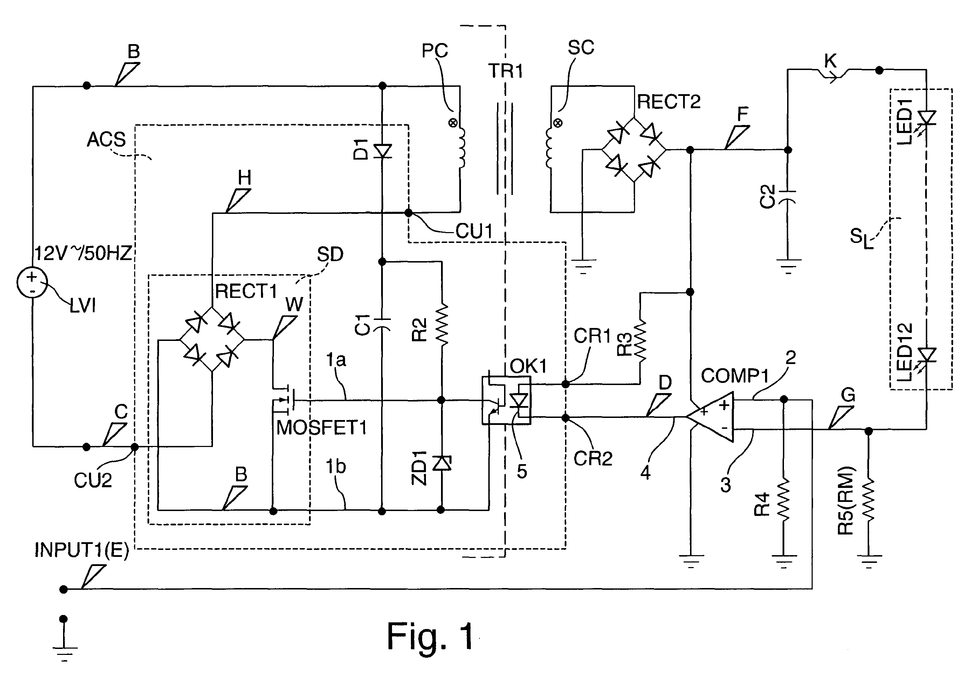

**Fig. 1** illustrates a first embodiment of an inventive electronic circuit, used for powering an LED signal lamp with a constant current, by means of a low frequency (typically ≤ 100 Hz), low voltage (typically ≤ 36 V) current source.

At a voltage input LVI, a 12V / 50 Hz AC (alternating current) voltage is present. The voltage input LVI is connected to a series connection of a primary coil PC of a transformer TR1 and an AC switch ACS, with its current contacts CU1 and CU2.

When the AC switch ACS is conductive, current flows through the primary coil PC, and a voltage is induced in a secondary coil SC of the transformer TR1. The winding ratio of windings of the primary coil to the secondary coil NP/NS is 1: 10 in the example shown. The voltage at the secondary coil SC is rectified at the second rectifier RECT2 (here a bridge rectifier) and used for loading a loading capacitor C2.

The loading capacitor C2 powers a signal lamp SL, comprising twelve power LEDS LED1-LED12 connected in series. The LED current K through the signal lamp SL also flows through a monitoring resistor RM connected in series with the signal lamp SL.

A voltage tapped at the monitoring resistor RM is fed into a comparator COMP1 at a second comparator input 3. The first comparator input 2 is connected to a control voltage input, denominated with INPUT1 in Fig. 1, which provides a control voltage E. Note that the control voltage E may be constant, or may be variable in order to adjust the brightness of the signal lamp SL. The first comparator input 2 is also connected to earth with a resistor R4.

The LED current K is controlled in a way such that the LED current K is not allowed to exceed a critical value. The voltage at the second comparator input 3 is proportional to the LED current K.

If the voltage at the second comparator input 3 is larger than the voltage at the first comparator input 2, a comparator output 4 is put to earth potential. In this case, current may flow through a light emitting diode (LED) 5 of an optocoupler OK1, namely from the loading capacitor C2 through a resistor R3, through LED 5 and to comparator output 4. To put it differently, a potential difference is established between the control contacts CR1 and CR2 of the AC switch ACS then.

When the LED 5 shines due to the current through it, the optocoupler OK1 becomes conductive and short-circuits the switching inputs 1a, 1 b of a switching device SD of the AC switch ACS. As a consequence, a switching transistor MOSFET1 of the switching device SD blocks. This means the left and right contacts of a first bridge rectifier RECT1 of the switching device SD are disconnected, such that the current contacts CU1 and CU2 of the AC switch ACS are no more electrically connected.

The disconnection of the current contacts CU1, CU2 prevents a current flow through the primary coil PC, and the loading capacitor C2 is no more loaded. In contrast, the loading capacitor C2 is discharged due to powering the LEDs LED1-LED12 of the signal lamp SL and the LED 5 of the optocoupler OK1. This means the voltage at the loading capacitor C2 is gradually reduced, and as a consequence the LED current K is reduced, too.

As soon as the LED current drops below its critical value, i.e. the voltage at the monitoring resistor RM falls below the control voltage at the first comparator input 2, the comparator COMP1 shuts down the current through LED5. The optocoupler OK1 becomes non-conductive again. Then at a starting capacitor C1, connected to the second switching input 1b and to the voltage input LVI via diode D1, a voltage is built up, which is tapped by a starting resistor R2 and provided to the gate of the switching transistor MOSFET1 at the first switching input 1 a. This voltage makes the switching transistor MOSFET1 conductive again, and current may flow through the first bridge rectifier RECT1 and the primary coil PC again. Thus the loading of the loading capacitor C2 is resumed.

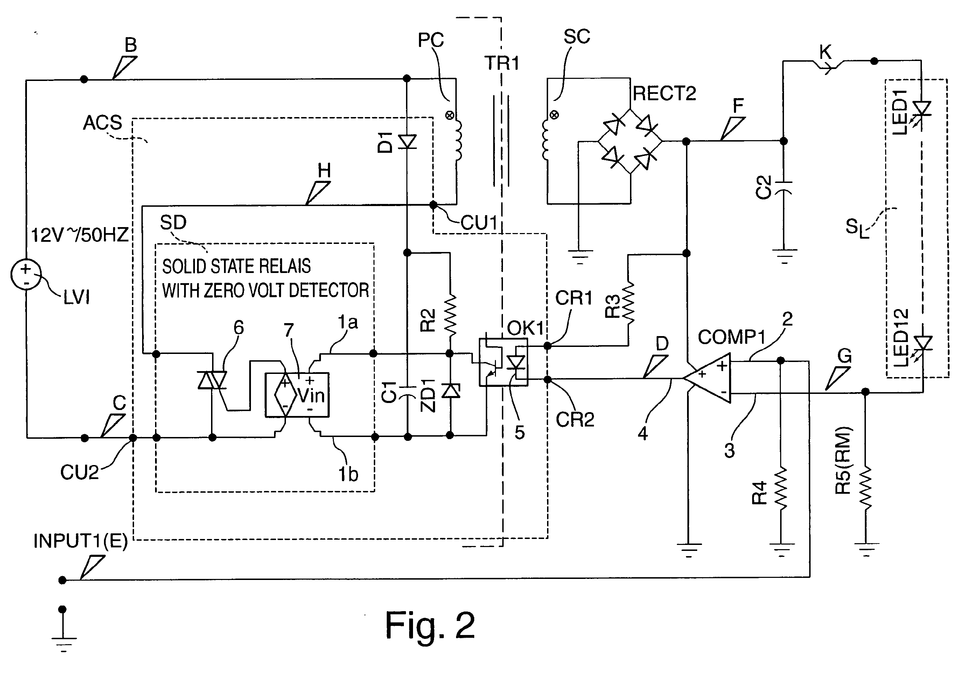

**Fig. 2** shows another embodiment of an inventive electronic circuit, which works basically the same as the embodiment of Fig. 1. Therefore, only the differences are detailed below.

In the embodiment of Fig. 2, the switching device SD comprises a triac 6 connected to the current contacts CU1, CU2 of the AC switch ACS. The triac 6 is controlled by a zero crossing switch 7. The switching inputs 1a, 1 b connect the control inputs of the zero crossing switch 7 with the optocoupler OK1.

This embodiment is particularly resistant to RF interferences.

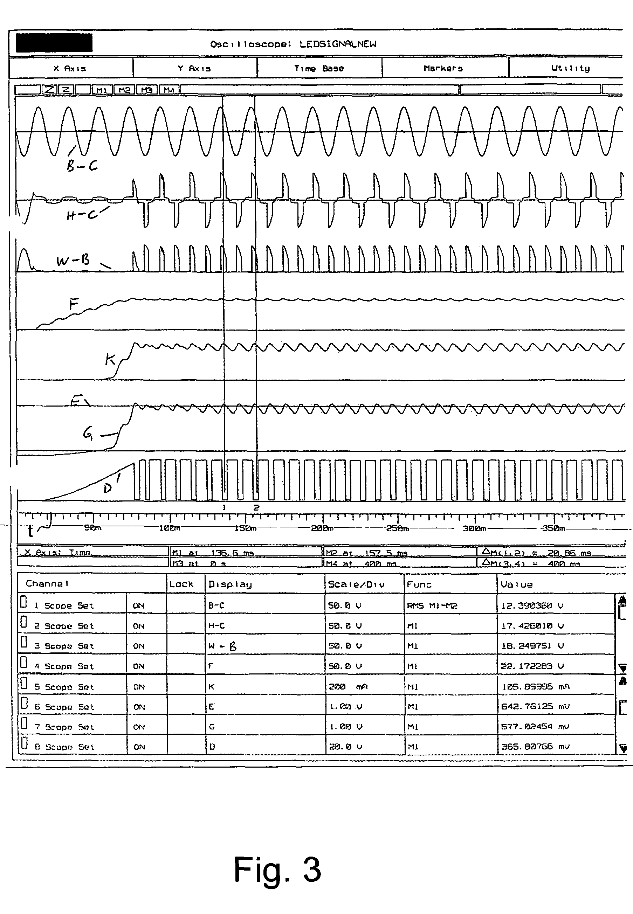

**Fig. 3** illustrates the function of the embodiment of Fig. 1 by means of oscillographic measurements of potentials and current intensities at various positions, as a function of time. Each position belongs to a line in the upper half of Fig. 3. The time t is indicated below the line belonging to position D, from t=0 when the signal lamp is switched on by providing voltage at the voltage input LVI up to about t=395 ms. Note that the scale varies from line to line, as can be read from the table in the bottom part of Fig. 3.

The voltage input VLI provides continuously a 12V, 50 Hz AC voltage (see line B-C).

During the first about 30 ms, the AC switch ACS blocks, since the switching transistor MOSFET1 does not have a sufficient potential at its gate. Consequently, all input voltage drops across the AC switch ACS, see line H-C.

After about 30 ms, the starting capacitor C1 is sufficiently loaded, and the AC switch ACS becomes conductive (see line W-B, indicating no more voltage drops across MOSFET1). As a consequence, most of the voltage provided by the voltage input LVI (see line B-C) now drops across the primary coil PC, and only few of the voltage drops across the current contacts CU1, CU2 of the AC switch ACS (see line H-C). Further, the loading capacitor C2 is slowly loaded (see line F).

At about 60 ms, the voltage at the loading capacitor is sufficient to exceed the sum of band gaps of the LEDs LED1-LED12 of the signal lamp SL, and an increasing LED current K (see line K) is registered. At the same time, the voltage across the measuring resistor RM (see line G) rises.

At about 75 ms for the first time, the voltage at position G exceeds the voltage at position E (see lines E, G). Then the comparator COMP1 switches off the AC switch. In more detail, the comparator COMP1 sets the comparator output 4 to earth potential, i.e. zero potential here (see line D). This causes the LED 5 to shine, and the optocoupler OK1 becomes conductive. This, in turn, makes the switching transistor MOSFET1 to block, what results in a voltage drop across the switching transistor MOSFET 1 (see line W-B). The input voltage drops again across the AC switch ACS (see line H-B), and the transformer TR1 cannot load the loading transistor C2 any more.

Then, for about 10 ms on, the voltage at position F drops, as does the LED current K. The potential at position G decreases.

As soon as the potential at position G has fallen below the potential at E again at about t=80 ms, the comparator COMP1 disconnects the comparator output 4 from earth potential (see line D), and the optocoupler OK1 becomes non-conductive again. By means of the starting capacitor C1 and the starting resistor R2, the gate of the switching transistor MOSFET1 at 1 a gets potential again, what means the switching transistor MOSFET1 becomes conductive again (see line W-B), and also the AC switch ACS becomes conductive again (see line H-C). The loading of the loading capacitor C2 is resumed, and in particular the potential at position F rises again.

In the following, loading and discharging of the loading capacitor C2 alternate at a period of about 21 ms. As a result, the LED current K is kept roughly constant over time.

In practice, a loading of the loading capacitor C2 up to about 48 V with about 4 V per LED, and an LED current K of about 300 mA on average have been found useful.

Although the inventive electronic circuits according to the invention are typically more expensive than the light bulb they replace, the inventive electronic circuits are more economic due to the longer lifetime of the LEDs (with a factor of about 50 more, up to 100.000 hours lifetime for LEDs). In particular, maintenance efforts are reduced.

The inventive electronic circuit is in particular useful for operating LED signal lamps of railway signals or traffic lights.

## Claims

1. Electronic circuit for controlling an LED (light emitting diode) signal lamp, with a voltage input (LVI) for a low frequency, low voltage current source, and with an LED signal lamp (SL) comprising a plurality of LEDs (LED1-LED12) connected in series,
comprising
- a transformer (TR1) with a primary coil (PC) and a secondary coil (SC),
- an AC (alternating current) switch (ACS) with two current contacts (CU1, CU2) and two control contacts (CR1, CR2), wherein the primary coil (PC) is connected to the voltage input (LVI) via the two current contacts (CU1, CU2) of the AC switch (ACS),
- a second rectifier (RECT2), in particular bridge rectifier, wherein the secondary coil (SC) is connected to the second rectifier (RECT2),
- a loading capacitor (C2) connected to the output of the second rectifier (RECT2), wherein the LED signal lamp (SL) is connected to the loading capacitor (C2),
- a monitoring resistor (RM) connected in series with the LED signal lamp (SL),
- a control voltage input (input1) for providing a control voltage (E),
- a comparator (COMP1), wherein a first comparator input (2) is connected to the control voltage input (input1) and a second comparator input (3) is connected to the monitoring resistor (RM), and wherein a comparator output (4) is connected to one of the control contacts (CR2) of the AC switch (ACS) for controlling the AC switch (ACS) such that the AC switch (ACS) is switched off when the voltage at the second comparator input (3) exceeds the voltage at the first comparator input (2).

2. Electronic circuit according to claim 1, **characterized in that** the AC switch (ACS) comprises a switching device (SD) connecting the two current contacts (CU1, CU2), wherein the switching device (SD) comprises two switching inputs (1 a, 1 b) controlled via the control contacts (CR1, CR2).

3. Electronic circuit according to claim 2, **characterized in that** the switching device (SD) comprises a first rectifier (RECT1), in particular bridge rectifier, connected to a switching transistor (MOSFET1), and that the gate or base of the switching transistor (MOSFET1) is one of the switching inputs (1 a).

4. Electronic circuit according to claim 2, **characterized in that** the switching device (SD) comprises a triac (6), in particular wherein the switching device (SD) further comprises a zero-crossing switch (7) driving the triac (6).

5. Electronic circuit according to claim 2, **characterized in that** one of the switching inputs (1 a) is connected to a starting resistor (R2) and the other switching input (1 b) is connected to a starting capacitor (C1), and that the starting resistor (R2) and the starting capacitor (C1) together are connected to the voltage input (LVI) via a diode (D1).

6. Electronic circuit according to claim 2, **characterized in that** the switching inputs (1a, 1 b) are connected by a Zener diode (ZD1).

7. Electronic circuit according to claim 1, **characterized in that** the AC switch comprises an optocoupler (OK1), with the control contacts (CR1, CR2) of the AC switch (ACS) being connected to an LED (5) of the optocoupler (OK1).

8. Electronic circuit according to claim 1, **characterized in that** one of the control contacts (CR1) of the AC switch (ACS) is connected to the loading capacitor (C2), in particular via a resistor (R3).

9. Electronic circuit according to claim 1, **characterized in that** the primary coil (PC) has a number of NP windings, and the secondary coil (SC) has a number of NS windings, with a ratio NP/NS of between 1:4 up to 1:25, in particular wherein NP/NS is about 1:10.
